# EUROPEAN PATENT SPECIFICATION

(11) **EP 3 914 773 B1**
(45) Date of publication and mention of the grant of the patent: **17.12.2025**
(21) Application number: 20745854.8
(22) Date of filing: 22.01.2020
(51) Int. Cl.: E01C 13/08, G01M 17/007, E01F 9/30, E01C 9/00

(54) **GRASS SURROGATE**
GRASSURROGAT
SUBSTITUT DE GAZON

(30) Priority: 24.01.2019 US 201916256412
(43) Date of publication of application: 01.12.2021
(73) Proprietor: Toyota Jidosha Kabushiki Kaisha, Toyota-shi, Aichi-Ken 471-8571 (JP); The Trustees of Indiana University, Indianapolis, IN 46202 (US); Ohio State Innovation Foundation, Columbus, OH 43201 (US)
(72) Inventor: SHERONY, Rini, Plano, Texas 75024 (US); CHIEN, Stanley Yung-Ping, Indianapolis, Indiana 46202 (US); YI, Qiang, Indianapolis, Indiana 46202 (US); LIN, Jun, Indianapolis, Indiana 46202 (US); SAHA, Abir, Indianapolis, Indiana 46202 (US); CHEN, Yaobin, Indianapolis, Indiana 46202 (US); CHEN, Chi-Chih, Columbus, Ohio 43201 (US)
(74) Representative: D Young & Co LLP
(86) International application number: PCT/US2020/014500
(87) International publication number: WO 2020/154339

(56) References cited:
- JP-B2- 4 049 778
- KR-B1- 100 840 406
- US-A1- 2003 182 855
- US-A1- 2005 129 903
- US-A1- 2008 175 665
- US-A1- 2013 177 718
- US-A1- 2014 303 828
- SAHA ABIR: "DEVELOPMENT OF INFRARED REFLECTANCE CHARACTERISTICS OF SURROGATE ROADSIDE OBJECTS", 31 August 2018 (2018-08-31), Indiana University-Purdue University Indianapolis, pages 1 - 133, XP055968376, Retrieved from the Internet <URL:https://scholarworks.iupui.edu/handle/1805/16930> [retrieved on 20221005]

## Description

### FIELD

The subject matter described herein relates in general to a grass surrogate and, more particularly, to a vehicle testing environment.

### BACKGROUND

When a vehicle departs from a road, the situation can quickly become extremely dangerous. For instance, there are various roadside objects that a vehicle can collide with, and/or the vehicle may be prone to rollover on grass. Some vehicles are equipped with a road departure mitigation system, and it is expected that the use of such systems will increase in the future. A road departure mitigation system can detect when a vehicle is about to leave the road. In such case, the road departure mitigation system can provide a warning to the driver and/or can automatically control one or more vehicle systems (e.g., steering and/or braking) to prevent the vehicle from departing the road.

Patent document US 2013/0177718 A1 discloses an artificial turf surface comprised of natural looking fibrous materials that is coated with special heat reflecting materials that do not alter the appearance of the fibers, but reflect unwanted heat.

Document authored by Saha Abir: "Development of Infrared Reflectance Characteristics of Surrogate Roadside Objects", 31 August 2018, Indiana University-Purdue University Indianapolis, was retrieved by the European Patent office on 2022-10-05 from https://scholarworks.iupui.edu/handle/1805/16930. This document discloses an approach for the determination of infrared reflectance property of concrete, metal guardrail and grass for different LIDAR view angles.

### SUMMARY

In one respect, the subject matter described herein is directed to a grass surrogate according to independent claim 1.

In still another respect, the subject matter described herein is directed to a vehicle testing environment, such as a test track or a testing facility. The vehicle testing environment is according to claim 11.

### BRIEF DESCRIPTION OF THE DRAWINGS

FIG.1 is a view of an example of a grass surrogate.
FIG. 2 is a cross-sectional view of a portion of a grass blade of a grass surrogate, showing the grass blade being sensed by one or more sensors.
FIG. 3 is a view of a portion of a grass surrogate, showing a plurality of grass blades oriented at an angle relative to a base.
FIG. 4 is a view of an example of a vehicle testing environment.
FIG. 5 is a table of various example paint colors for a coating of the grass surrogate.
FIG. 6 is a table showing various examples of paint and pigment mixtures for a coating of the grass surrogate.
FIGS. 7A-H show examples of infrared reflectance requirements of the grass surrogate at various detection angles.
FIGS. 8A-H show the infrared reflectance of grass surrogates at various detection angles.
FIGS. 9A-F show examples of a suggested radar cross section at 77 GHz at various detection angles.
FIG. 10A shows the 77GHz radar cross section of natural grass at a 10 degree detection angle.
FIG. 10B shows the 77GHz radar cross section of a grass surrogate on asphalt at a 10 degree detection angle.
FIG. 11A shows the 77GHz radar cross section of natural grass at a 10 degree detection angle.
FIG. 11B shows the 77GHz radar cross section of a grass surrogate on asphalt at a 15 degree detection angle.

### DETAILED DESCRIPTION

According to arrangements herein, surrogates are provided for a roadside grass. These surrogates can approximate the overall visual appearance of the corresponding roadside grass, and they can exhibit substantially the same characteristics to one or more vehicle sensors (e.g., cameras, radar sensors, LIDAR sensors, etc.) as their corresponding roadside grass

These surrogates can be used in the testing of vehicles, such as autonomous vehicles and/or vehicles with a road departure mitigation system. The surrogates can be configured to be driven over by a test vehicle without damaging the test vehicle. The surrogates can also be configured to be driven over by a vehicle without damaging the surrogate in many cases.

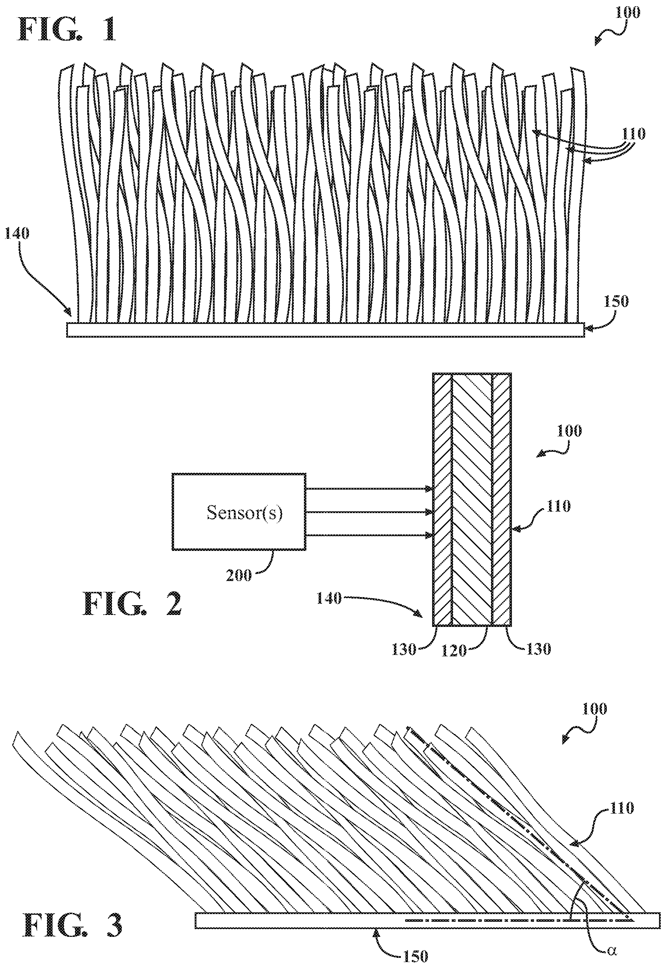

Detailed embodiments are disclosed herein; however, it is to be understood that the disclosed embodiments are intended only as exemplary. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of embodiments and aspects herein. Various arrangements are shown in FIGS. 1-11, but they are not limited to the illustrated structure(s) or application(s).

For purposes of simplicity and clarity of illustration, elements shown in the figures have not necessarily been drawn to scale. For example, the dimensions of some of the elements may be exaggerated relative to other elements for clarity. Further, where considered appropriate, reference numbers are repeated among the figures to indicate corresponding, analogous, or like features. In addition, numerous specific details are set forth in order to provide a thorough understanding of the embodiments described herein. However, it will be understood by those of ordinary skill in the art that the embodiments described herein can be practiced without these specific details.

As used herein, the terms "substantially" and "about" include exactly the term they modify and slight variations therefrom. Thus, the term "substantially vertically" means exactly vertically and slight variations therefrom. Slight variations therefrom can include being within normal manufacturing tolerance, within 15 degrees/percent/units or less, 10 degrees/percent/units or less, 9 degrees/percent/units or less, 8 degrees/percent/units or less, 7 degrees/percent/units or less, 6 degrees/percent/units or less, 5 degrees/percent/units or less, 4 degrees/percent/units or less, 3 degrees/percent/units or less, 2 degrees/percent/units or less, 1 degree/percent/unit or less.

Grass is found along roads throughout the world.

Examples of a grass surrogate 100 is shown in FIGS. 1-4. The grass surrogate 100 can have substantially the same size, shape, and/or configuration as grass, which can be any type of grass now known or later discovered or developed. The grass surrogate is configured to exhibit substantially the same characteristics as a natural grass relative to one or more vehicle sensors (e.g., a camera sensor, a LIDAR sensor, or a radar sensor). "Natural grass" refers to any living grass, now known or later discovered or developed.

Referring to FIG. 1, the grass surrogate 100 can include a plurality of grass blades 110 operatively connected to a base 150 in any suitable manner, including for, example, by one or more adhesives, one or more forms of bonding, one or more forms of stitching, one or more forms of weaving, and/or one or more forms of mechanical engagement. The term "operatively connected," as used throughout this description, can include direct or indirect connections, including connections without direct physical contact. The grass blades 110 and the base 150 may be in the nature of any synthetic grass, artificial grass, or artificial turf. The grass blades 110 can be made of polyethylene, rubber, or nylon. The grass blades 110 can be substantially straight. Alternatively, the grass blades 110 can be bowed, wavy, or otherwise non-straight.

The plurality of grass blades 110 have substantially the same size and shape as grass blades of natural grass. The grass blades 110 can be made in a variety of sizes (e.g., length, width, height, etc.) to match their natural grass counterpart. The grass blades 110 can have a length. In one or more arrangements, the grass blades 110 can have a length of substantially 5.72 centimeters (2.25 inches). The grass blades 110 can have any suitable width. In one or more arrangements, the grass blades 110 can have a width of substantially 5 centimeters (2 inches). The grass blades 110 can be provided at any suitable density. For example, in one or more arrangements, the plurality of grass blades have a density of about 2000 grams per square meter (50 ounces per square yard) to about 3000 grams per square meter (80 ounces per square yard). More particularly, the plurality of grass blades have a density of about 2200 grams per square meter (65 ounces per square yard) to about 2400 grams per square meter (70 ounces per square yard).

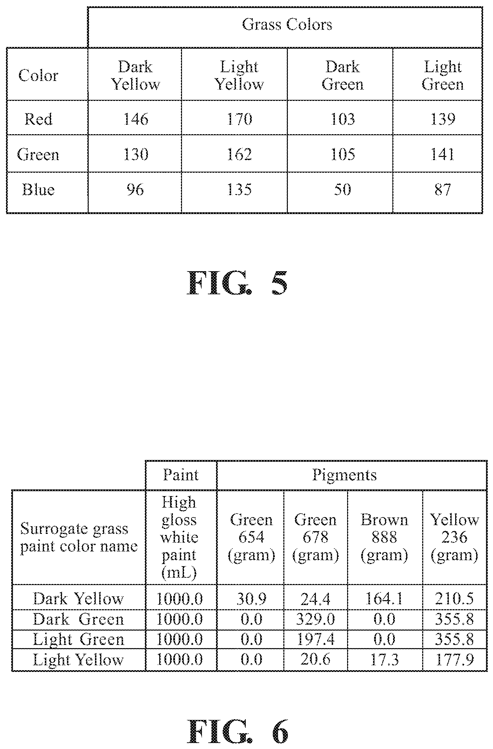

An example of a cross-sectional view of a portion of one of the grass blades 110 is shown in FIG. 2. The grass blade 110 includes a blade body 120. The blade body 120 is at least partially covered by a coating 130. In some instances, a root 140 of the grass blades 110 can be at least partially covered by the coating 130. The coating 130 includes a mixture of paint and pigments. The paint is high gloss acrylic paint. The pigments are high reflectance pigments. There can be any suitable paint to pigment ratio in the coating 130. Non-limiting examples of various paint and pigment mixtures for the coating 130 are shown in FIG. 6.

The grass surrogate 100 can be any color needed to simulate natural grass. For instance, the grass surrogate 100 can have a color that mimics living grass. As another example, the grass surrogate 100 can have a color that mimics dead grass. As a further example, the grass surrogate 100 can be the color of both living grass and dead grass. Some examples of colors that the grass surrogate 100 can be include green, brown, yellow, combinations thereof, and any and all variations of color properties (e.g., hue, tint, shade, saturation, brightness, chroma, intensity, brightness, etc.) of those colors. The color of the grass surrogate 100 can be attained by the color of the blade body 120 and/or the color of the coating 130. Non-limiting examples of various paint colors for surrogate grass are shown in FIG. 5.

The grass blades 110 can have any suitable orientation relative to the base 150. Referring to FIG. 3, an angle α can be defined between the grass blades 110 and the base 150. In one or more arrangements, a majority of the grass blades 110 can be angled at an acute angle relative to the base 150. In one or more arrangements, a substantial majority of the grass blades 110 can be angled at an acute angle relative to the base 150. In one or more arrangements, the angle α can be about 85 degrees or less, about 80 degrees or less, about 75 degrees or less, about 70 degrees or less, about 65 degrees or less, about 60 degrees or less, about 55 degrees or less, about 50 degrees or less, about 45 degrees or less, about 40 degrees or less, about 35 degrees or less, about 30 degrees or less, about 25 degrees or less, about 20 degrees or less, about 15 degrees or less, or about 10 degrees or less. As used herein, "majority" means 50.01 percent or greater. As used herein, "substantial majority" means 70 percent or greater, 75 percent or greater, 80 percent or greater, 85 percent or greater, 90 percent or greater, 95 percent or greater, 96 percent or greater, 97 percent or greater, 98 percent or greater, or 99 percent or greater. In some instances, the angle α can be achieved, at least in part, by the manner in which the coating 130 is applied to the grass blades 110. In one or more arrangements, a majority of the grass blades 110 can extend in substantially the same direction relative to the base 150 or some other reference point. In one or more arrangements, a substantial majority of the grass blades 110 can extend in the same direction relative to the base 150 or some other reference point.

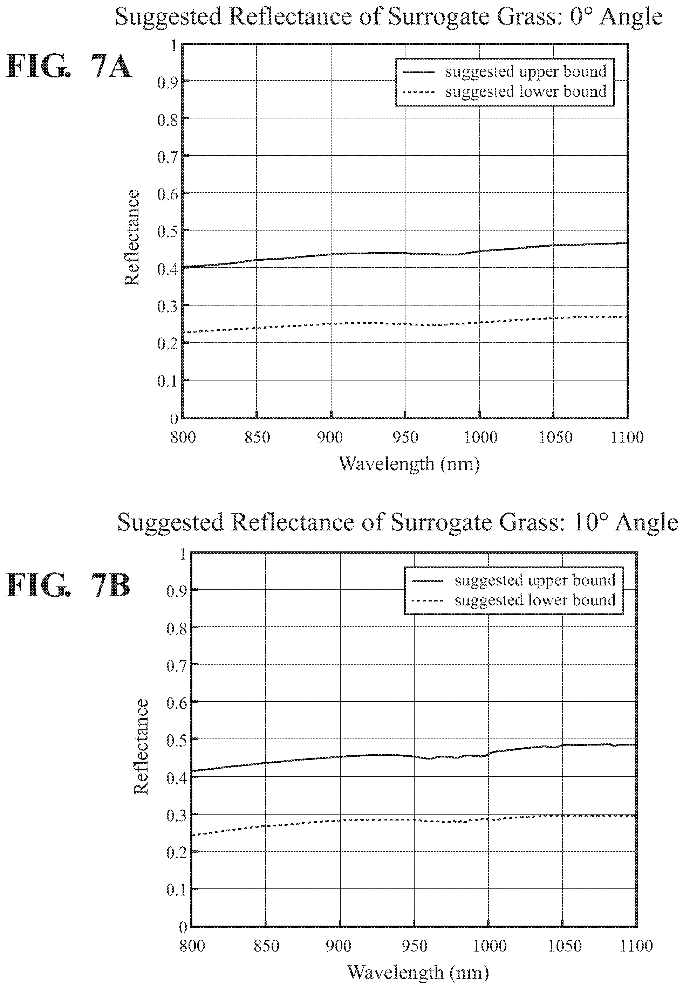

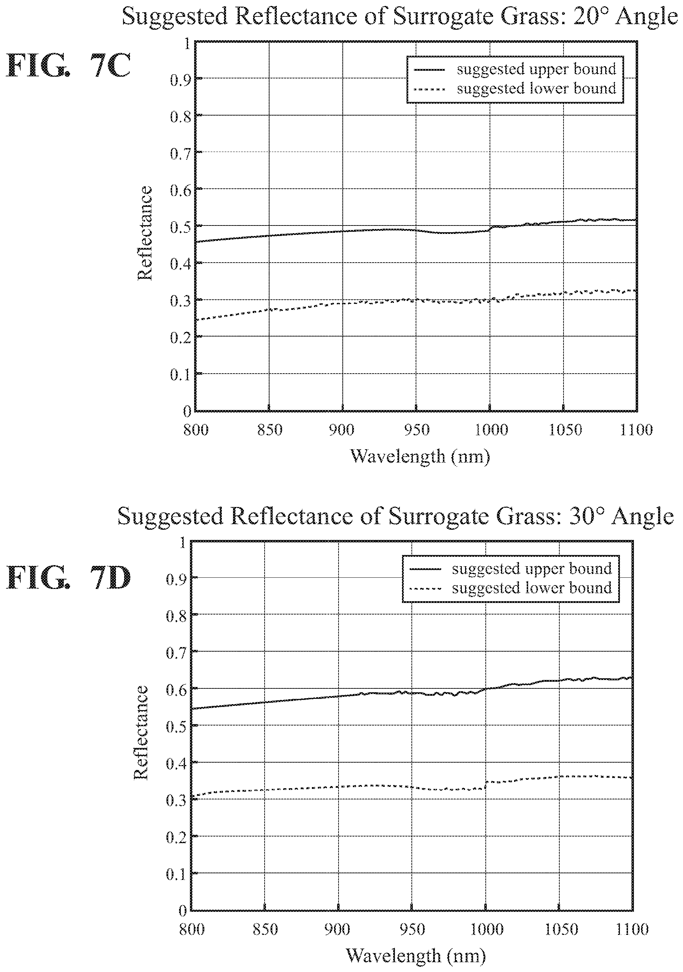

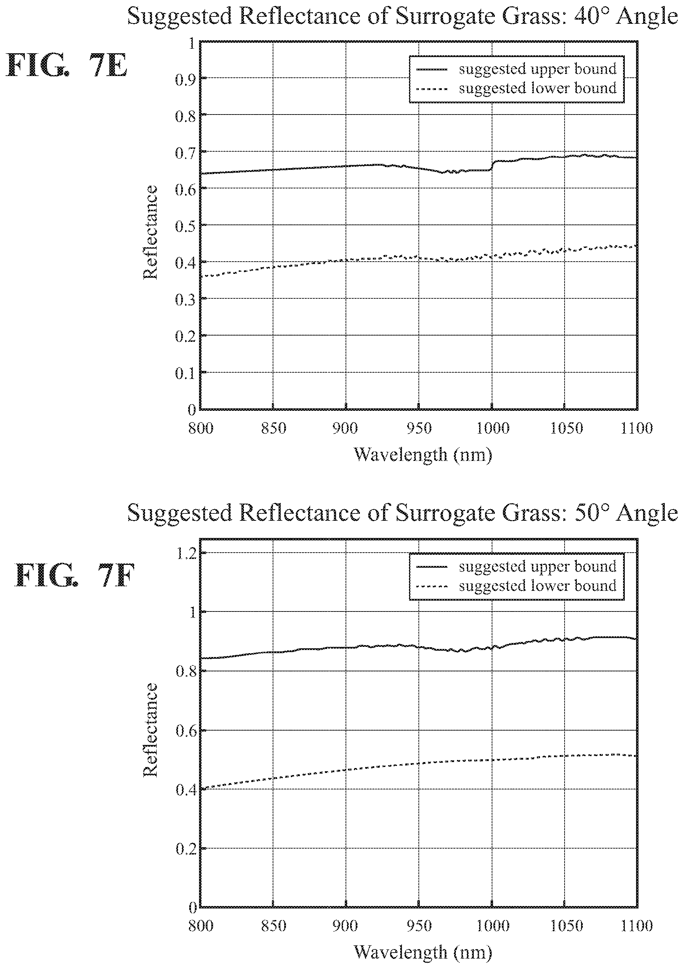

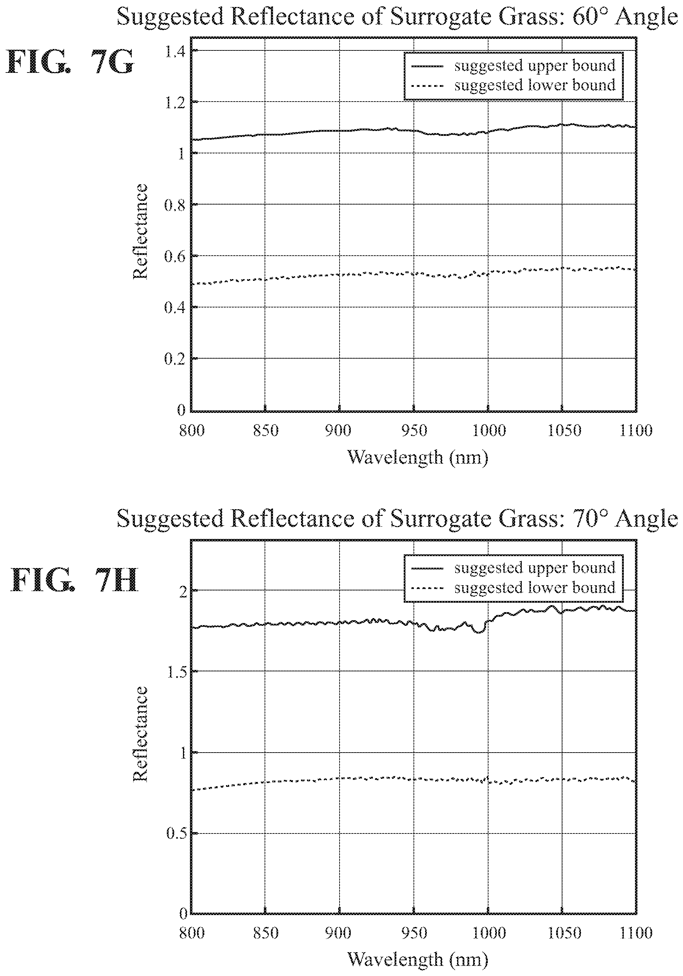

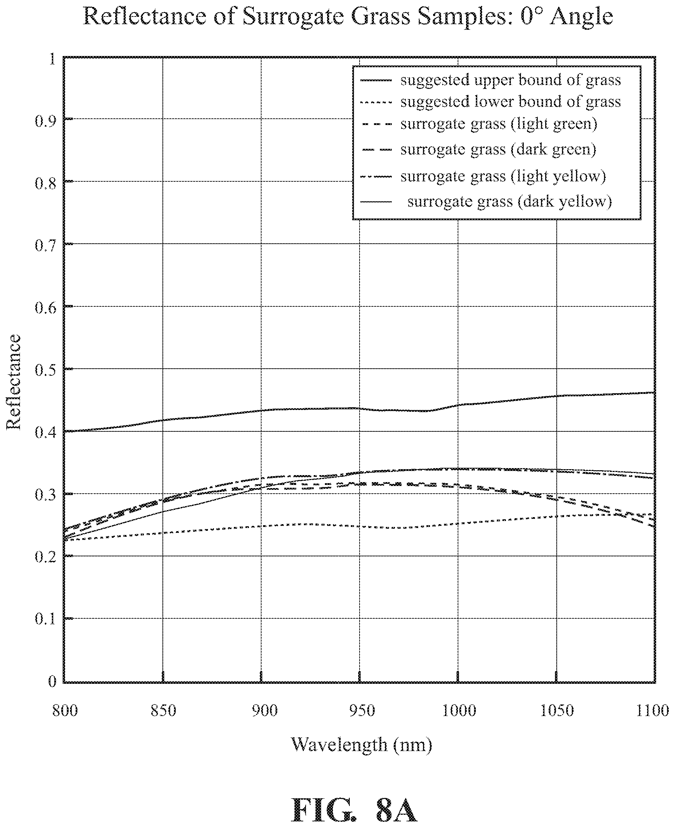

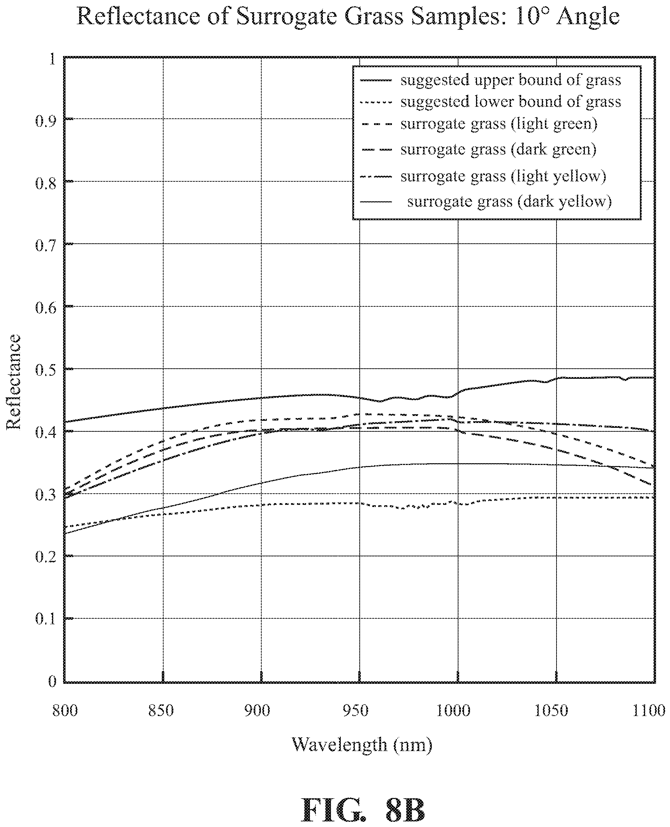

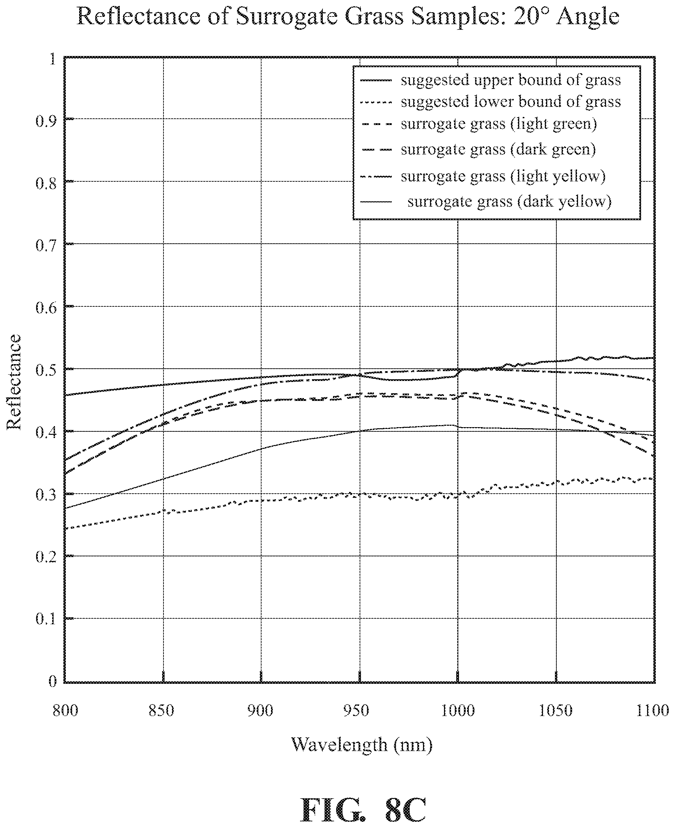

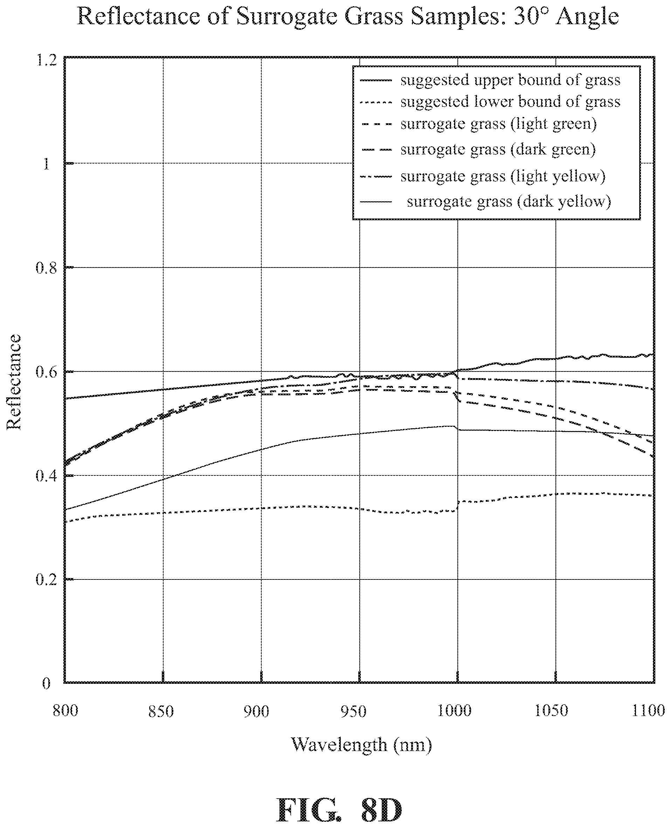

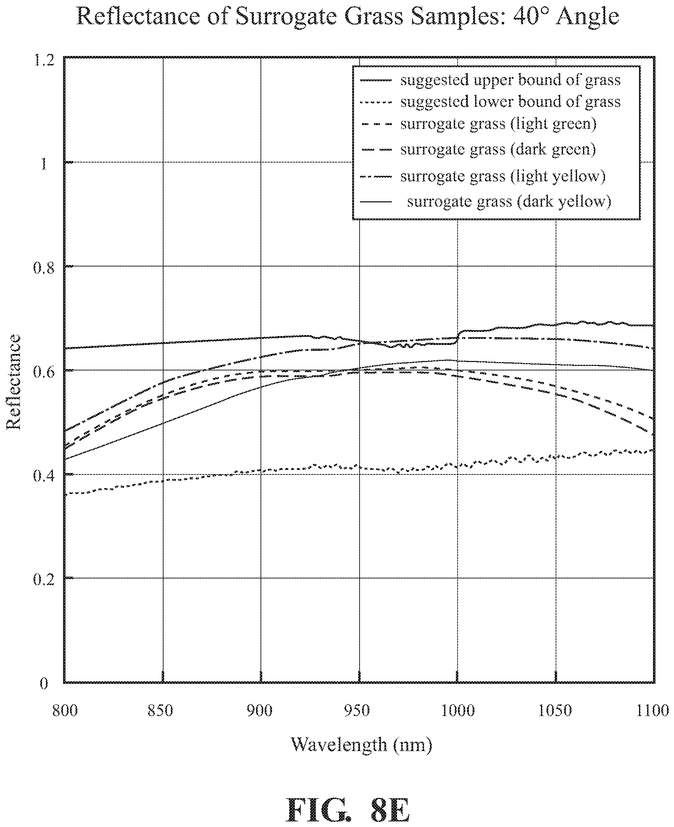

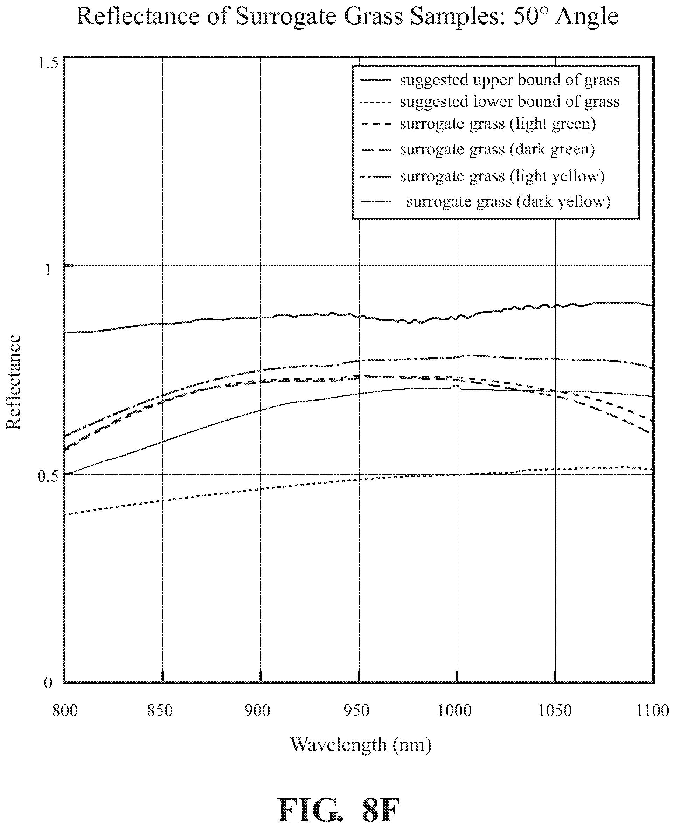

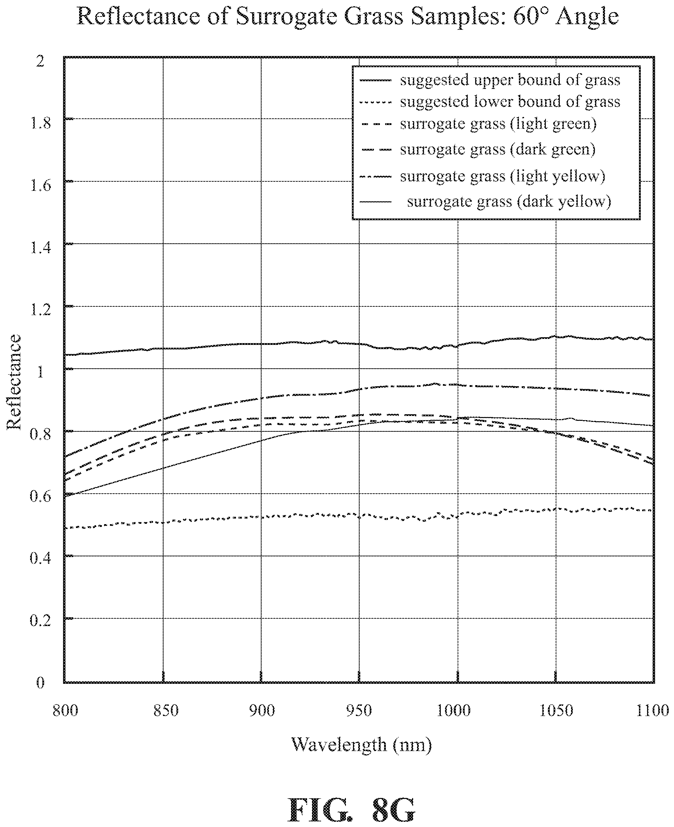

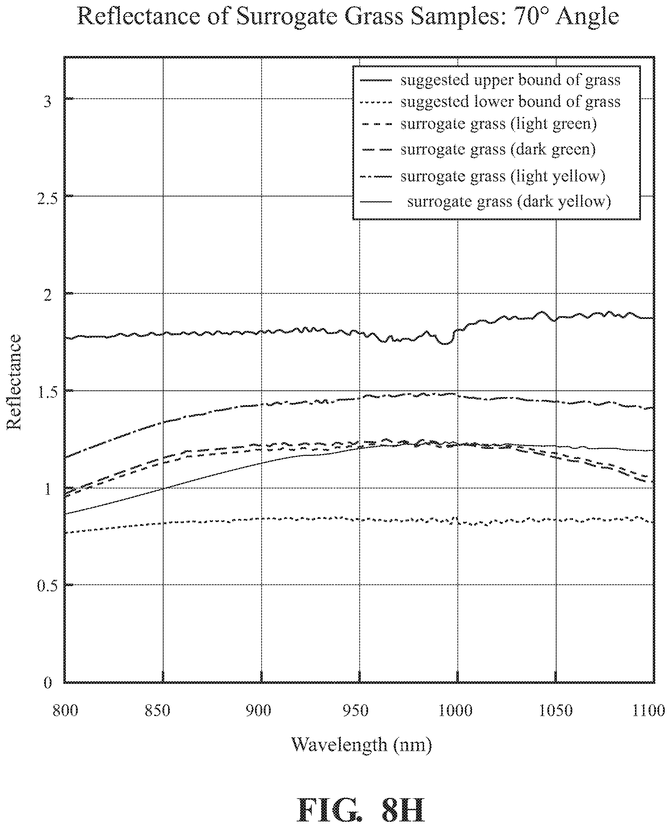

Examples of infrared reflectance requirements of the grass surrogate 100 at various detection angles are shown in FIGS. 7A-H. Test data showed that various sample grass surrogates substantially met these infrared requirements in the detection angle range of 0 to 70 degrees, as is shown in FIGS. 8A-H.

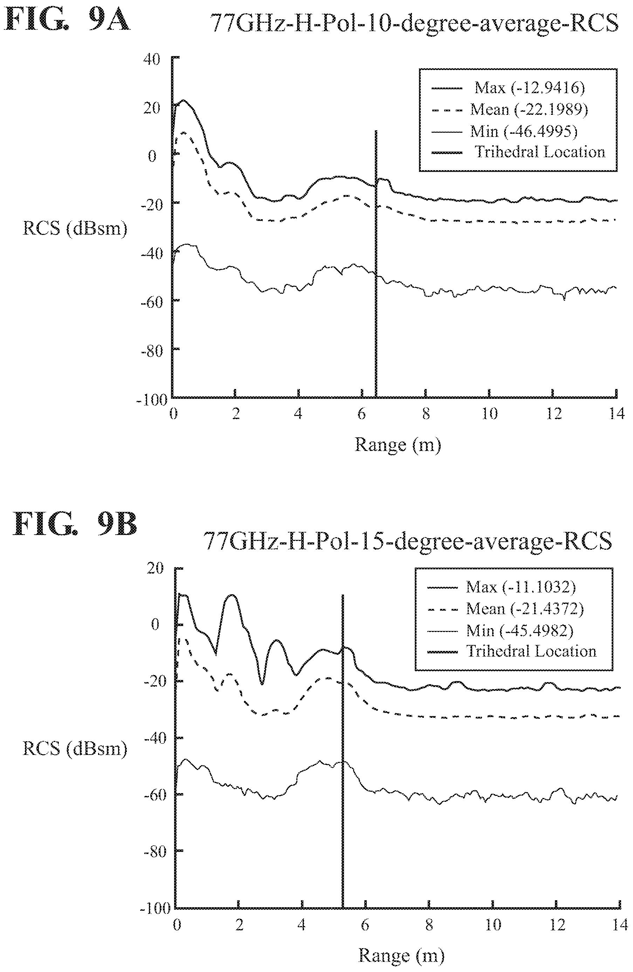

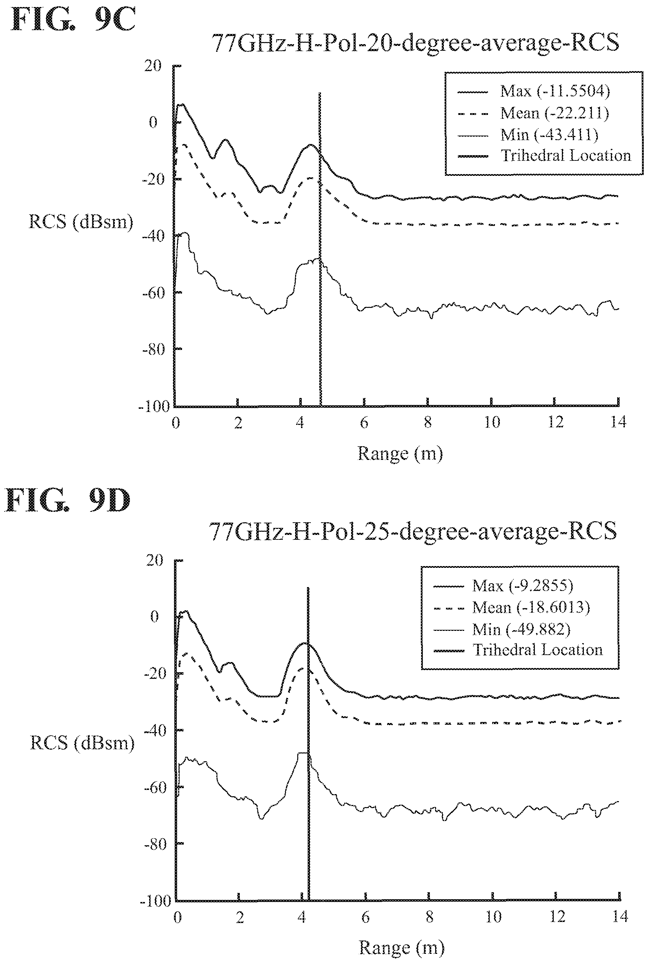

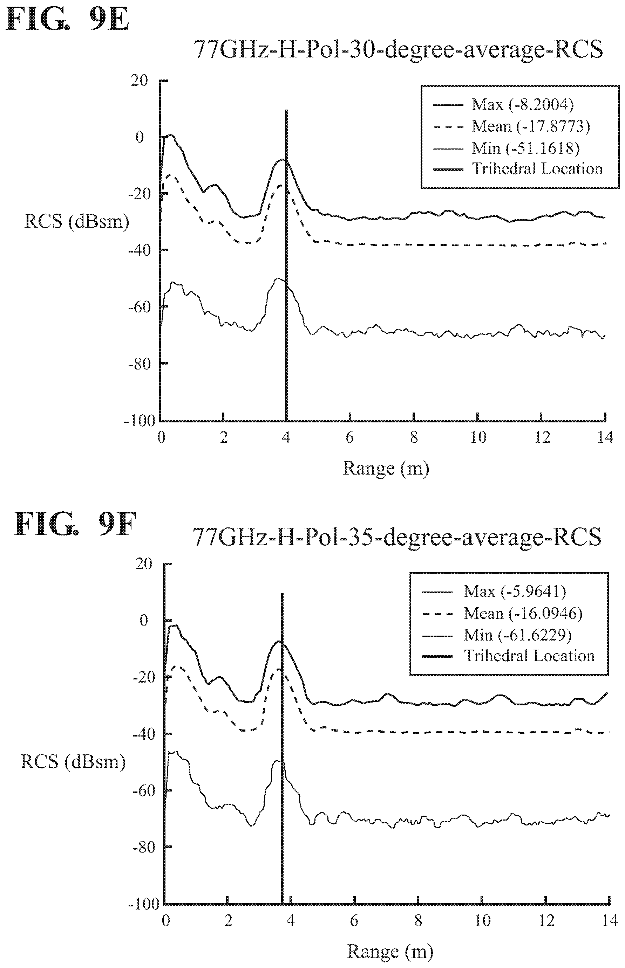

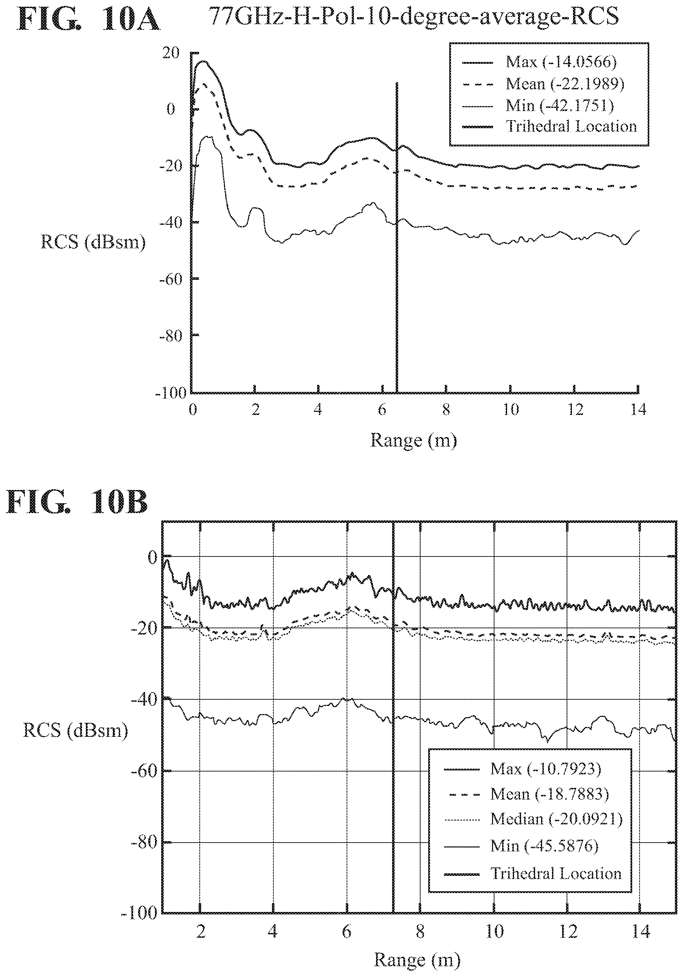

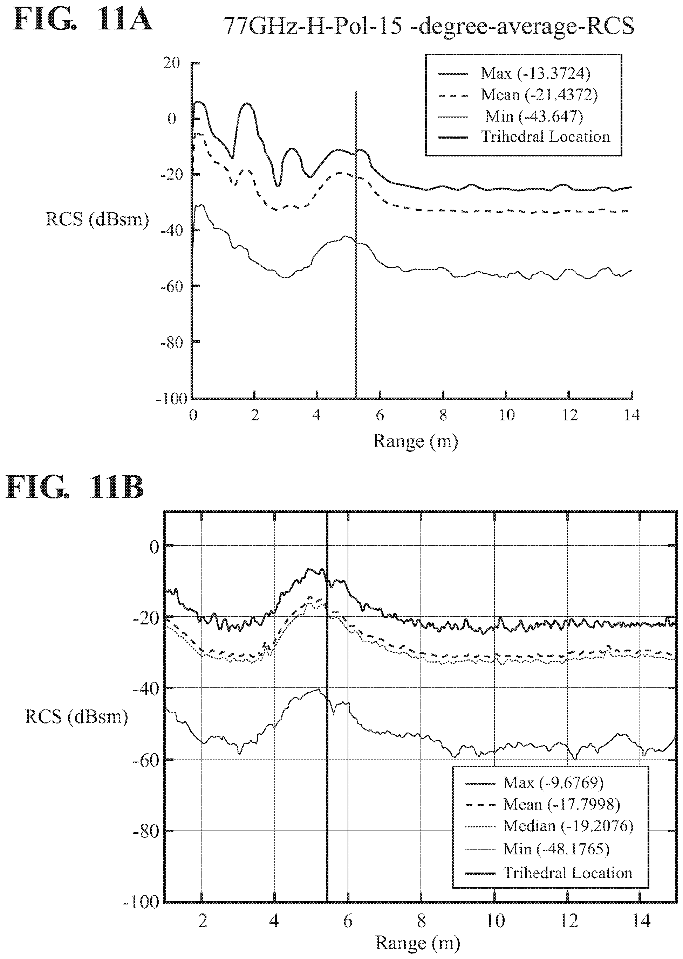

Examples of radar cross section (RCS) requirements for the grass surrogate 100 at 77 GHz and at various detection angles are shown in FIGS. 9A-F. Test data showed that the sample grass surrogates substantially met radar cross section (RCS) requirements (e.g., ±5dB of the mean RCS of natural grass for both 24GHz and 77GHz radar). For instance, FIG. 10A shows the 77GHz radar cross section of natural grass at a 10 degree detection angle, and FIG. 10B shows the 77GHz radar cross section of a grass surrogate on asphalt at a 10 degree detection angle. As another example, FIG. 11A shows the 77GHz radar cross section of natural grass at a 10 degree detection angle, and FIG. 11B shows the 77GHz radar cross section of a grass surrogate on asphalt at a 15 degree detection angle.

The grass surrogate 100 described herein can be used for various purposes. For instance, the grass surrogate 100 can be used in connection with the testing of vehicles. A vehicle can have one or more sensors 200 (FIG. 2). "Sensor" means any device, component and/or system that can acquire, detect, determine, assess, monitor, measure, quantify, and/or sense something. The one or more sensors 200 can acquire, detect, determine, assess, monitor, measure, quantify, and/or sense in real-time. As used herein, the term "real-time" means a level of processing responsiveness that a user or system senses as sufficiently immediate for a particular process or determination to be made, or that enables the processor to keep up with some external process.

In arrangements in which the vehicle includes a plurality of sensors 200, the sensors 200 can work independently from each other. Alternatively, two or more of the sensors 200 can work in combination with each other. In such case, the two or more sensors 200 can form a sensor network. The one or more sensors 200 can be operatively connected to processor(s), the data store(s), and/or other elements or systems of the vehicle.

The one or more sensors 200 can include one or more environment sensors configured to acquire, detect, determine, assess, monitor, measure, quantify, and/or sense driving environment data. "Driving environment data" includes and data or information about the external environment in which a vehicle is located or one or more portions thereof. For example, the one or more environment sensors can acquire data or information about obstacles in at least a portion of the external environment of the vehicle. In one or more arrangements, the one or more sensors 200 can include one or more radar sensors, one or more LIDAR sensors, and/or one or more cameras.

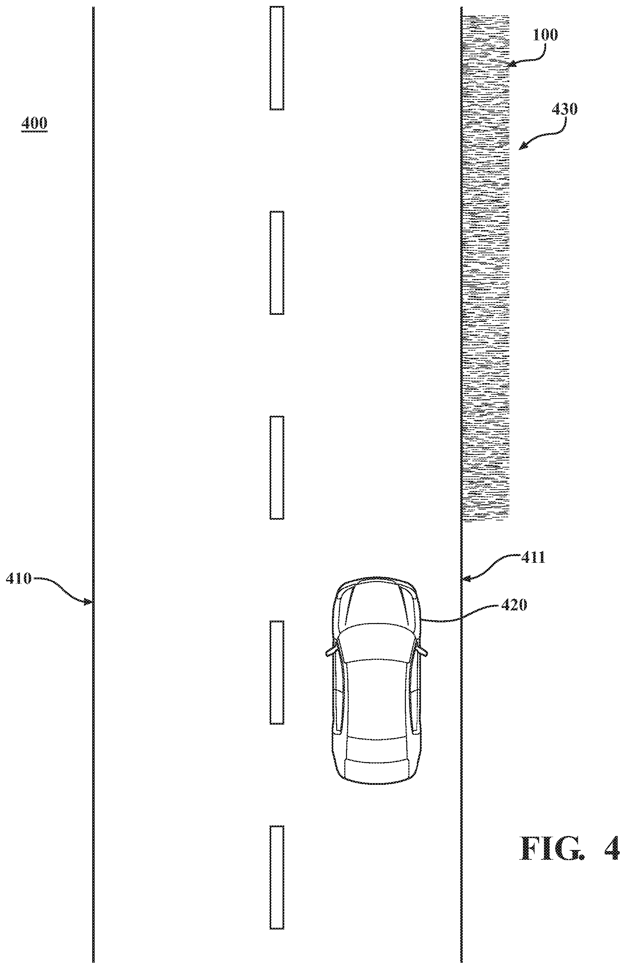

The grass surrogate 100 can be used in a vehicle testing environment 400, as is shown in FIG. 4. The vehicle testing environment 400 can be, for example, a test track or a testing facility. The vehicle testing environment 400 can include a road 410 on which a test vehicle 420 can be driven, autonomously, semi-autonomously, and/or manually. The grass surrogate 100 can be set up in an appropriate position with respect to the road 410. For example, the grass surrogate 100 can be substantially adjacent to the road 410. For instance, the grass surrogate 100 can be placed at an edge 411 of the road 410. In such case, the grass surrogate 100 may define at least a portion of the edge 411 of the road 410 in that location. Alternatively or in addition, the edge 411 of the road 410 may be defined by road markings. In some instances, the grass surrogate 100 can be laterally spaced from the edge 411 of the road 410.

While FIG. 4 show the grass surrogate 100 as being used on one side of the road 410, it will be understood that the grass surrogate 100 can be used on one or both sides of the road 410. The grass surrogate(s) 100 used on one side of a road can be substantially identical to the grass surrogate(s) 100 used on the other side of the road, or they can be substantially mirror images of each other.

In some arrangements, one continuous grass surrogate 100 can be used on a side of the road 410, as is shown in FIG. 4. Alternatively, there can be a plurality of grass surrogates 100 on the side of the road 410. The plurality of grass surrogates can be substantially identical to each other. Alternatively, one or more of the plurality of grass surrogates can be different from the other grass surrogates in one or more respects, including in any respect described herein.

The plurality of grass surrogates can be arranged in any suitable manner. For instances, the grass surrogates can be substantially aligned with each other. Alternatively, one or more of the grass surrogates can be offset from the other grass surrogates. The grass surrogates 100 can be arranged to be substantially adjacent to each other, or they can be spaced from each other. In some or more arrangements, the plurality of grass surrogates can be arranged in an end to end manner such that the grass surrogates abut each other. In some instances, two or more of the grass surrogates 100 can be operatively connected to each other in any suitable manner, including, for example, one or more adhesives, one or more forms of mechanical engagement, and/or one or more fasteners.

In arrangements in which the grass blades 110 of the grass surrogate 100 are oriented at an acute angle relative to the base 150, the grass surrogate 100 can be positioned such that the grass blades 110 lean away from the road 410. More particularly, the grass surrogate 100 can be positioned such that the grass blades 110 lean away from the road 410 in a direction that is substantially 90 degrees relative to the travel direction and/or the longitudinal axis of the road 410. In other arrangements, the grass surrogate 100 can be positioned such that the grass blades 110 lean in a direction that is substantially parallel to the travel direction of the road 410 and/or the longitudinal axis of the road 410. More particularly, the grass surrogate 100 can be positioned such that the grass blades 110 lean in the travel direction of the road 410. Thus, the grass blades 110 that are located along the road 410 but ahead of a vehicle traveling in the travel direction on the road 410 will lean away from the vehicle.

The grass surrogate 100 can be positioned on a surface 430 in the vehicle test environment 400. In some instances, the type of surface can affect how the grass surrogate 100 is perceived by the one or more sensors 200 of the test vehicle 420. Thus, the surface 430 can be selected, configured, and/or provided to ensure that the grass surrogate 100 meets vehicle sensor requirements. In one or more arrangements, the surface 430 can be an asphalt surface.

During testing, the test vehicle 420 can move along the road 410. One or more sensors 200 of the test vehicle 420 can acquire driving environment data, including data about the grass surrogate 100. For instance, the test vehicle 420 can acquire data about the grass surrogate 100 using camera(s), radar sensor(s), and/or LIDAR sensor(s). Due to the construction of the grass surrogate 100, the data of the grass surrogate 100 acquired by the sensor(s) 200 can mimic the sensor data that would be acquired by the sensor(s) 200 of natural grass in a real world driving environment. The acquired driving environment data can be processed and/or analyzed, such as by one or more processors, to determine an appropriate action.

If the test vehicle 420 veers off of the road 410 and onto the grass surrogate 100, damage to the test vehicle 420 and/or the grass surrogate 100 can be avoided and/or minimized. Thus, the grass surrogate 100 can continue to be used in future tests. The grass surrogate 100 can help the test vehicle 420 to distinguish the boundaries of the road 410, particularly in those portions of the road 410 that do not include lane markings.

As an example, the surrogates described herein can be used in connection with the testing of the sensors and/or systems of an autonomous vehicle. "Autonomous vehicle" means a vehicle that configured to operate in an autonomous operational mode in which one or more computing systems are used to navigate and/or maneuver the vehicle along a travel route with minimal or no input from a human driver. In one or more arrangements, the autonomous vehicle can be highly automated or completely automated. As another example, the surrogates described herein can be used to road departure mitigation systems of non-autonomous vehicles.

It will be appreciated that arrangements described herein can provide numerous benefits, including one or more of the benefits mentioned herein. Arrangements described herein result in a grass surrogate that generates the color, patterns, infrared and radar properties of natural grass. Arrangements described here enable the surrogates to be used in vehicle testing, particularly the testing of road departure systems. Arrangements described herein can be driven over during testing, thereby avoiding damage to the surrogates and/or to the test vehicle. Arrangements described herein can be used for internal testing and to support upcoming European New Car Assessment Programme (EUNCAP) requirements for road departure systems and potential future National Highway Traffic Safety Administration (NHTSA)/ Insurance Institute for Highway Safety (IIHS) requirements. It will be appreciated that the grass surrogates according to arrangements described herein do not require the time and expense of upkeep (e.g., watering, cutting, fertilizing, etc.) compared to using natural grass. Unlike the natural grass that can be deformed/damaged when run over by the test vehicle, the grass surrogate can keep its shape after being run over many times.

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e. open language). The phrase "at least one of ... and ...." as used herein refers to and encompasses any and all possible combinations of one or more of the associated listed items. As an example, the phrase "at least one of A, B and C" includes A only, B only, C only, or any combination thereof (e.g. AB, AC, BC or ABC).

## Claims

1. A grass surrogate (100) comprising:
a plurality of grass blades (110), the grass blades including a blade body (120) and a coating (130) covering at least a portion of the blade body, the blade body being made of a synthetic material, wherein the coating includes a mixture of high gloss acrylic paint and high reflectance pigments,
the grass surrogate having a color that is substantially the same as natural grass, whereby the grass surrogate appears substantially the same to a vehicle camera as natural grass,
the grass surrogate having a radar cross-section, RCS, of the grass surrogate being ±5dB of the mean RCS of natural grass for 24GHz or 77GHz radar, whereby the grass surrogate exhibits substantially the same RCS to a vehicle radar sensor as natural grass, and
the grass surrogate having substantially the same infrared reflectivity as the natural grass, whereby the grass surrogate exhibits substantially the same infrared reflectivity to a vehicle LIDAR sensor as natural grass.

2. The grass surrogate of claim 1, further including a base (150), wherein the plurality of grass blades are operatively connected to the base, wherein, a substantial majority of the plurality of grass blades are angled at an acute angle relative to the base.

3. The grass surrogate of claim 1, wherein the plurality of grass blades have substantially the same size or shape as a plurality of natural grass blades.

4. The grass surrogate of claim 1, wherein the blade body is made of polyethylene, rubber, or nylon.

5. The grass surrogate of claim 1, wherein the grass surrogate has a color that mimics living grass or a combination of living and dead grass.

6. The grass surrogate of claim 1, wherein the plurality of grass blades have a density of about 2000 grams per square meter to about 3000 grams per square meter.

7. The grass surrogate of claim 1, wherein the plurality of grass blades include a root (140), and wherein the coating covers at least a portion of the root.

8. The grass surrogate of claim 1, further comprising a base, wherein:
the plurality of grass blades are operatively connected to the base;
a substantial majority of the plurality of grass blades are angled at an acute angle relative to the base (150).

9. The grass surrogate of claim 8, wherein the blade body is made of polyethylene, rubber, or nylon.

10. The grass surrogate of claim 8, wherein the grass surrogate has a color that mimics living grass or a combination of living and dead grass.

11. A vehicle testing environment (400) comprising:
a road (410); and
a grass surrogate (100) provided on a side of the road, the grass surrogate including a plurality of grass blades (110), the grass blades including a blade body (120) and a coating (130) covering at least a portion of the blade body, the blade body being made of a synthetic material, wherein the coating includes a mixture of high gloss acrylic paint and high reflectance pigments,
the grass surrogate having a color that is substantially the same as natural grass, whereby the grass surrogate appears substantially the same to a vehicle camera as natural grass,
the grass surrogate having a radar cross-section, RCS, of the grass surrogate being ±5dB of the mean RCS of natural grass for 24GHz or 77GHz radar, whereby the grass surrogate exhibits substantially the same RCS to a vehicle radar sensor as natural grass, and
the grass surrogate having substantially the same infrared reflectivity as the natural grass, whereby the grass surrogate exhibits substantially the same infrared reflectivity to a vehicle LIDAR sensor as natural grass.

12. The vehicle testing environment of claim 11, wherein the grass surrogate further includes a base (150), wherein the plurality of grass blades are operatively connected to the base, and wherein, a substantial majority of the plurality of grass blades are angled at an acute angle relative to the base.

13. The vehicle testing environment of claim 12, wherein the grass surrogate is positioned such that the plurality of grass blades lean away from the road.

14. The vehicle testing environment of claim 12, wherein the grass surrogate is supported on an asphalt surface (430).

15. The vehicle testing environment of claim 11, wherein the blade body is made of polyethylene, rubber, or nylon.

## Patentansprüche

1. Grasersatz (100), umfassend:
eine Vielzahl von Grashalmen (110), wobei die Grashalme einen Halmkörper (120) und eine mindestens einen Teil des Halmkörpers abdeckende Beschichtung (130) einschließen,
wobei der Halmkörper aus einem synthetischen Material gefertigt ist, wobei die Beschichtung ein Gemisch aus Hochglanzacrylfarbe und hochreflektierenden Pigmenten einschließt,
wobei der Grasersatz eine Farbe aufweist, die im Wesentlichen die gleiche wie die von natürlichem Gras ist, wobei der Grasersatz für eine Fahrzeugkamera im Wesentlichen ebenso erscheint wie natürliches Gras,
wobei der Grasersatz einen Radarquerschnitt (RCS) des Grasersatzes von ±5 dB in Bezug auf den mittleren RCS von natürlichem Gras bei 24-GHz- oder 77-GHz-Radar aufweist,
wobei der Grasersatz
für einen Fahrzeugradarsensor im Wesentlichen den gleichen RCS wie natürliches Gras aufweist, und
wobei der Grasersatz im Wesentlichen das gleiche Infrarotreflexionsvermögen wie das natürliche Gras aufweist, wodurch der Grasersatz für einen LIDAR-Sensor im Wesentlichen das gleiche Infrarotreflexionsvermögen ausstrahlt wie natürliches Gras.

2. Grasersatz nach Anspruch 1, der ferner eine Basis (150) einschließt, wobei die Vielzahl von Grashalmen mit der Basis wirkverbunden ist, wobei eine wesentliche Mehrheit der Grashalme in Bezug auf die Basis in einem spitzen Winkel angewinkelt ist.

3. Grasersatz nach Anspruch 1, wobei die Vielzahl von Grashalmen im Wesentlichen die gleiche Größe oder Form aufweist wie eine Vielzahl von natürlichen Grashalmen.

4. Grasersatz nach Anspruch 1, wobei der Halmkörper aus Polyethylen, Gummi oder Nylon gefertigt ist.

5. Grasersatz nach Anspruch 1, wobei der Grasersatz eine Farbe aufweist, die lebendes Gras oder eine Kombination aus lebendem und totem Gras nachahmt.

6. Grasersatz nach Anspruch 1, wobei die Vielzahl von Grashalmen eine Dichte von etwa 2000 Gramm pro Quadratmeter bis etwa 3000 Gramm pro Quadratmeter aufweist.

7. Grasersatz nach Anspruch 1, wobei die Vielzahl von Grashalmen eine Wurzel (140) einschließt und wobei die Beschichtung mindestens einen Abschnitt der Wurzel abdeckt.

8. Grasersatz nach Anspruch 1, ferner umfassend eine Basis, wobei:
die Vielzahl von Grashalmen mit der Basis wirkverbunden ist;
wobei eine wesentliche Mehrheit der Grashalme in Bezug auf die Basis (150) in einem spitzen Winkel angewinkelt ist.

9. Grasersatz nach Anspruch 8, wobei der Halmkörper aus Polyethylen, Gummi oder Nylon gefertigt ist.

10. Grasersatz nach Anspruch 8, wobei der Grasersatz eine Farbe aufweist, die lebendes Gras oder eine Kombination aus lebendem und totem Gras nachahmt.

11. Fahrzeugtestumgebung (400), umfassend:
eine Straße (410); und
einen Grasersatz (100), bereitgestellt an einer Seite der Straße, wobei der Grasersatz eine Vielzahl von Grashalmen (110) einschließt, wobei die Grashalme einen Halmkörper (120) und eine mindestens einen Teil des Halmkörpers abdeckende Beschichtung (130) einschließen, wobei der Halmkörper aus einem synthetischen Material gefertigt ist, wobei die Beschichtung ein Gemisch aus Hochglanzacrylfarbe und hochreflektierenden Pigmenten einschließt,
wobei der Grasersatz eine Farbe aufweist, die im Wesentlichen die gleiche wie die von natürlichem Gras ist, wobei der Grasersatz für eine Fahrzeugkamera im Wesentlichen ebenso erscheint wie natürliches Gras,
wobei der Grasersatz einen Radarquerschnitt (RCS) des Grasersatzes von ±5 dB in Bezug auf den mittleren RCS von natürlichem Gras bei 24-GHz- oder 77-GHz-Radar aufweist,
wobei der Grasersatz
für einen Fahrzeugradarsensor im Wesentlichen den gleichen RCS wie natürliches Gras aufweist, und
wobei der Grasersatz im Wesentlichen das gleiche Infrarotreflexionsvermögen wie das natürliche Gras aufweist, wodurch der Grasersatz für einen LIDAR-Sensor im Wesentlichen das gleiche Infrarotreflexionsvermögen ausstrahlt wie natürliches Gras.

12. Fahrzeugtestumgebung nach Anspruch 11, wobei der Grasersatz ferner eine Basis (150) einschließt, wobei die Vielzahl von Grashalmen mit der Basis wirkverbunden ist, und wobei eine wesentliche Mehrheit der Grashalme in Bezug auf die Basis in einem spitzen Winkel angewinkelt ist.

13. Fahrzeugtestumgebung nach Anspruch 12, wobei der Grasersatz derart angeordnet ist, dass die Vielzahl von Grashalmen von der Straße weg geneigt ist.

14. Fahrzeugtestumgebung nach Anspruch 12, wobei der Grasersatz auf einer Asphaltoberfläche (430) gelagert ist.

15. Fahrzeugtestumgebung nach Anspruch 11, wobei der Halmkörper aus Polyethylen, Gummi oder Nylon gefertigt ist.

## Revendications

1. Substitut d'herbe (100) comprenant :
une pluralité de brins d'herbe (110), les brins d'herbe incluant un corps de brin (120) et un revêtement (130) couvrant au moins une portion du corps de brin, le corps de brin étant constitué d'un matériau synthétique, dans lequel le revêtement inclut un mélange de peinture acrylique à brillance élevée et de pigments à réflectance élevée,
le substitut d'herbe ayant une couleur qui est substantiellement la même que l'herbe naturelle, grâce à quoi le substitut d'herbe apparaît à une caméra de véhicule substantiellement pareil à de l'herbe naturelle, le substitut d'herbe ayant une section transversale radar, RCS, du substitut d'herbe étant de ±5 dB de la RCS moyenne d'herbe naturelle pour un radar 24 GHz ou 77 GHz, grâce à quoi le substitut d'herbe présente à un capteur radar de véhicule substantiellement la même RCS que de l'herbe naturelle, et
le substitut d'herbe ayant substantiellement la même réflectivité infrarouge que l'herbe naturelle, grâce à quoi le substitut d'herbe présente à un capteur LIDAR de véhicule substantiellement la même réflectivité infrarouge que du de l'herbe naturelle.

2. Substitut d'herbe selon la revendication 1, incluant en outre une base (150), dans lequel la pluralité de brins d'herbe sont fonctionnellement reliés à la base, dans lequel, une majorité substantielle de la pluralité de brins d'herbe sont en angle à un angle aigu relativement à la base.

3. Substitut d'herbe selon la revendication 1, dans lequel la pluralité de brins d'herbe ont substantiellement la même taille ou la même forme qu'une pluralité de brins d'herbe naturelle.

4. Substitut d'herbe selon la revendication 1, dans lequel le corps de brin est constitué de polyéthylène, de caoutchouc, ou de nylon.

5. Substitut d'herbe selon la revendication 1, dans lequel le substitut d'herbe a une couleur qui imite l'herbe vivante ou une combinaison d'herbe vivante et morte.

6. Substitut d'herbe selon la revendication 1, dans lequel la pluralité de brins d'herbe ont une densité d'environ 2 000 grammes par mètre carré à environ 3 000 grammes par mètre carré.

7. Substitut d'herbe selon la revendication 1, dans lequel la pluralité de brins d'herbe inclut une racine (140), et dans lequel le revêtement couvre au moins une portion de la racine.

8. Substitut d'herbe selon la revendication 1, comprenant en outre une base, dans lequel :
la pluralité de brins d'herbe sont fonctionnellement reliés à la base ;
une majorité substantielle de la pluralité de brins d'herbe sont en angle à un angle aigu relativement à la base (150).

9. Substitut d'herbe selon la revendication 8, dans lequel le corps de brin est constitué de polyéthylène, de caoutchouc, ou de nylon.

10. Substitut d'herbe selon la revendication 8, dans lequel le substitut d'herbe a une couleur qui imite le l'herbe vivant ou une combinaison de d'herbe vivante et morte.

11. Environnement de test de véhicule (400) comprenant :
une route (410) ;
un substitut d'herbe (100) prévu sur un côté de la route, le substitut d'herbe incluant une pluralité de brins d'herbe (110), les brins d'herbe incluant un corps de brin (120) et un revêtement (130) couvrant au moins une portion du corps de brin, le corps de brin étant constitué d'un matériau synthétique, dans lequel le revêtement inclut un mélange de peinture acrylique à brillance élevée et de pigments à réflectance élevée,
le substitut d'herbe ayant une couleur qui est substantiellement la même que l'herbe naturelle, grâce quoi à le substitut d'herbe apparaît à une caméra de véhicule substantiellement pareil à de l'herbe naturelle, le substitut d'herbe ayant une section transversale radar, RCS, du substitut d'herbe étant de ±5 dB de la RCS moyenne d'herbe naturelle pour un radar 24 GHz ou 77 GHz, grâce à quoi le substitut d'herbe présente à un capteur radar de véhicule substantiellement la même RCS que de l'herbe naturelle, et
le substitut d'herbe ayant substantiellement la même réflectivité infrarouge que l'herbe naturelle, grâce à quoi le substitut d'herbe présente à un capteur LIDAR de véhicule substantiellement la même réflectivité infrarouge que du de l'herbe naturelle.

12. Environnement de test de véhicule selon la revendication 11, dans lequel le substitut d'herbe inclut en outre une base (150), dans lequel la pluralité de brins d'herbe sont fonctionnellement reliés à la base, et dans lequel, une majorité substantielle de la pluralité de brins d'herbe sont en angle à un angle aigu relativement à la base.

13. Environnement de test de véhicule selon la revendication 12, dans lequel le substitut d'herbe est positionné de telle sorte que la pluralité de brins d'herbe penchent à l'écart de la route.

14. Environnement de test de véhicule selon la revendication 12, dans lequel le substitut d'herbe est supporté sur une surface d'asphalte (430).

15. Environnement de test de véhicule selon la revendication 11, dans lequel le corps de brin est constitué de polyéthylène, de caoutchouc, ou de nylon.
